(19) **Europäisches Patentamt European Patent Office Office européen des brevets**

(11) **EP 4 769 512 A1**

(12) # EUROPEAN PATENT APPLICATION

(43) Date of publication:
01.07.2026 Bulletin 2026/27

(21) Application number: 25216227.6

(22) Date of filing: 17.11.2025

(51) International Patent Classification (IPC):
$H01M\ 4/13^{(2010.01)}$    $H01M\ 4/139^{(2010.01)}$
$H01M\ 4/62^{(2006.01)}$    $H01M\ 4/66^{(2006.01)}$
$H01M\ 4/04^{(2006.01)}$

(52) Cooperative Patent Classification (CPC):
H01M 4/13; H01M 4/0404; H01M 4/139;
H01M 4/622; H01M 4/661; H01M 4/667;
H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 JP 2024232534

(71) Applicant: Toyota Jidosha Kabushiki Kaisha
Toyota-shi, Aichi-ken 471-8571 (JP)

(72) Inventors:
• ONO, Masato
Toyota-shi, 471-8571 (JP)
• TERANISHI, Tadashi
Toyota-shi, 471-8571 (JP)

• OISHI, Yusuke
Toyota-shi, 471-8571 (JP)
• HIRUKAWA, Tomofumi
Toyota-shi, 471-8571 (JP)
• SHIMURA, Yosuke
Toyota-shi, 471-8571 (JP)
• KAWASAKI, Hiroshi
Toyota-shi, 471-8571 (JP)
• TSUZUKI, Katsuhisa
Toyota-shi, 471-8571 (JP)
• IZU, Takashi
Toyota-shi, 471-8571 (JP)

(74) Representative: Kuhnen & Wacker
Patent- und Rechtsanwaltsbüro PartG mbB
Prinz-Ludwig-Straße 40 A
85354 Freising (DE)

(54) **ELECTRODE ACTIVE MATERIAL LAYER, ELECTRODE LAMINATE, AND METHOD FOR MANUFACTURING ELECTRODE LAMINATE**

(57) An electrode active material layer 100 includes an electrode active material and a binder 110, and is the electrode active material layer 100 in which a predetermined relationship is satisfied by an area proportion of the binder 110 in a fifth peripheral portion, an area proportion of the binder 110 in the first peripheral portion, an area proportion of the binder 110 in a fifth central portion, and an area proportion of the binder 110 in the first central portion.

FIG. 1

EP 4 769 512 A1

**Description**

FIELD

The present disclosure relates to an electrode active material layer, an electrode laminate, and a method for manufacturing an electrode laminate.

BACKGROUND

Various proposals to improve a physical property of an electrode active material layer by adjusting a distribution of binders present in the electrode active material layer and a shape of the electrode active material layer have been made.
PTL 1 discloses a method for manufacturing an electrode that includes a step of forming an active material layer including an active material and a binder, and a step of removing the binder on a surface of the active material layer by irradiating the surface of the active material layer with a pulsed laser having a pulse width of 100 ns or less. In PTL 1, according to the disclosure of PTL 1, an electrode having resistance reduced can be manufactured.
PTL 2 discloses a storage battery. The storage battery includes: an electrode group in which a positive electrode provided with a positive electrode layer containing a positive electrode active material in a positive electrode current collecting foil and a negative electrode provided with a negative electrode layer containing a negative electrode active material in a negative electrode current collecting foil are laminated and sandwiched between separators; a battery container that houses the electrode group; and an electrolyte solution filling the battery container. The positive electrode active material and the negative electrode active material are each substantially uniformly distributed in the positive and negative electrode layers, and a region where proportions of the electrolyte solution and the positive and negative electrode active materials are different is provided in the positive and negative electrode layers in which the positive electrode active material and the negative electrode active material are substantially uniformly distributed. In PTL 2, according to the disclosure of PTL 2, a calorific value can be adjusted without reducing an energy density.
PTL 3 discloses an electrode shape control method including a molding stage of molding a shape of electrode slurry by irradiating, with a laser, at least a part of an electrode sheet coated with the electrode slurry, and moving the electrode slurry of the portion irradiated with the laser to an adjacent portion. In PTL 3, according to the disclosure of PTL 3, the electrode shape control method and an electrode manufacturing method that can minimize a capacity loss while controlling a shape of an electrode after electrode coating can be provided.
Meanwhile, laser drying has been known as a method for drying electrode slurry applied onto a current collector layer. The laser drying has characteristics of lower energy consumption and a lower environmental load than hot-air drying.
PTL 4 discloses an electrode body manufacturing method that includes a conveyance step of conveying an electrode body coated with at least one electrode material by a conveyance unit, and a drying step of drying the electrode material while conveying the electrode body by the conveyance unit. The drying step includes an irradiation step of drying the electrode material by irradiating the electrode material with a laser when the electrode body is conveyed to at least one first position in a conveyance direction of the conveyance unit. The drying step includes a collection step of collecting vapor generated due to irradiation of the electrode material with the laser by a steam collection unit provided in at least one second position adjacent to the first position in the conveyance direction. In PTL 4, according to the disclosure of PTL 4, a decrease in drying efficiency can be suppressed when an electrode material is dried by a laser.

[CITATION LIST]

[PATENT LITERATURE]

[PTL 1] Japanese Unexamined Patent Publication (Kokai) No. 2023-161721
[PTL 2] Japanese Unexamined Patent Publication (Kokai) No. 2013-020802
[PTL 3] Japanese Unexamined Patent Application Publication (Translation of PCT Application) No. 2024-518633
[PTL 4] Japanese Unexamined Patent Publication (Kokai) No. 2023-169591

SUMMARY

[TECHNICAL PROBLEM]

In order to provide excellent performance as a battery, an electrode active material layer requires various mechanical characteristics such as binding capacity with a current collector layer and flexibility of the electrode active material layer itself, and the required mechanical characteristics may vary for each portion of the electrode active material layer.

Thus, the present disclosure has an objective to provide an electrode active material layer having a mechanical characteristic different for each portion.

[SOLUTION TO PROBLEM]

The present disclosure achieves the objective described above by the following means.

<Aspect 1>

An electrode active material layer includes an electrode active material and a binder, and satisfies the following relationship:

$$(B_{5p}/B_{1p})/(B_{5c}/B_{1c}) \geq 1.50$$

$$B_{5p} \geq B_{1p}$$

$B_{5p}$: an area proportion of the binder in a fifth peripheral portion when a cross section in a thickness direction of the electrode active material layer in a peripheral region of the electrode active material layer is divided into five equal parts of a first peripheral portion to the fifth peripheral portion from one surface to the other surface,
$B_{1p}$: an area proportion of the binder in the first peripheral portion,
$B_{5c}$: an area proportion of the binder in a fifth central portion when the cross section in the thickness direction of the electrode active material layer in a central region of the electrode active material layer is divided into five equal parts of a first central portion to the fifth central portion from one surface to the other surface, and
$B_{1c}$: an area proportion of the binder in the first central portion.

<Aspect 2>

The electrode active material layer according to aspect 1 satisfies the following relationship:

$$B_{5p}/B_{5c} \geq 1.20.$$

<Aspect 3>

The electrode active material layer according to aspect 1 or 2 satisfies the following relationship:

$$B_{1p}/B_{1c} \leq 0.80.$$

<Aspect 4>

The electrode active material layer according to any one of aspects 1 to 3, wherein a content of the binder is 0.5 mass% or more with respect to the electrode active material layer.

<Aspect 5>

The electrode active material layer according to any one of aspects 1 to 4, wherein a thickness of the electrode active material layer is 2.0 mm or less.

<Aspect 6>

A method for manufacturing the electrode active material layer according to any one of aspects 1 to 5 includes:

    providing an electrode composite material slurry layer containing the electrode active material, the binder, and a dispersion medium; and

drying the electrode composite material slurry layer, wherein,

in a step of the drying, a drying speed in a peripheral region of the electrode composite material slurry layer and a drying speed in a central region of the electrode composite material slurry layer are different.

<Aspect 7>

An electrode laminate includes: a current collector layer; and the electrode active material layer according to any one of aspects 1 to 5 laminated on the current collector layer.

<Aspect 8>

The electrode laminate according to aspect 7, wherein peel strength between the current collector layer and the electrode active material layer in the central region of the electrode active material layer is 0.06 N/cm or more.

<Aspect 9>

A method for manufacturing the electrode laminate according to aspect 7 or 8 includes:

providing a current collector layer including an electric conductor layer and a carbon coat layer on the electric conductor layer;
providing, on at least a part of the carbon coat layer, an electrode composite material slurry layer containing the electrode active material, the binder, and a dispersion medium; and
irradiating, with laser light, the electrode composite material slurry layer, and an adjacent region being adjacent to the electrode composite material slurry layer and including the carbon coat layer, and drying the electrode composite material slurry layer.

<Aspect 10>

The method according to aspect 9, wherein laser light absorptivity of the carbon coat layer with respect to the laser light is 0.2 or more.

<Aspect 11>

The method according to aspect 9 or 10, wherein heat conductivity of the electric conductor layer is 50 W/m·K or more.

[ADVANTAGEOUS EFFECTS OF INVENTION]

According to the present disclosure, an electrode active material layer having a mechanical characteristic different for each portion can be provided.

BRIEF DESCRIPTION OF DRAWINGS

FIG. 1 is a front cross-sectional view illustrating an electrode active material layer according to the present disclosure.

FIG. 2A is a top view and a bottom view illustrating the electrode active material layer according to the present disclosure.

FIG. 2B is a top view and a bottom view illustrating the electrode active material layer according to the present disclosure.

FIG. 3 is a schematic diagram illustrating a method for manufacturing an electrode laminate according to the present disclosure.

FIG. 4A is a schematic diagram illustrating Examples and Comparative Example.

FIG. 4B is a schematic diagram illustrating Examples and Comparative Example.

FIG. 4C is a schematic diagram illustrating Examples and Comparative Example.

FIG. 4D is a schematic diagram illustrating Examples and Comparative Example.

FIG. 4E is a schematic diagram illustrating Examples and Comparative Example.

FIG. 5A is a schematic diagram illustrating Examples and Comparative Example.

FIG. 5B is a schematic diagram illustrating Examples and Comparative Example.

FIG. 5C is a schematic diagram illustrating Examples and Comparative Example.

FIG. 5D is a schematic diagram illustrating Examples and Comparative Example.

FIG. 5E is a schematic diagram illustrating Examples and Comparative Example.

FIG. 5F is a schematic diagram illustrating Examples and Comparative Example.

DESCRIPTION OF EMBODIMENTS

<<Electrode Active Material Layer>>

An electrode active material layer according to the present disclosure is an electrode active material layer that includes an electrode active material and a binder, and satisfies the following relationship:

$$(B_{5p}/B_{1p})/(B_{5c}/B_{1c}) \geq 1.50$$

$$B_{5p} \geq B_{1p}$$

$B_{5p}$: an area proportion of the binder in a fifth peripheral portion when a cross section in a thickness direction of the electrode active material layer in a peripheral region of the electrode active material layer is divided into five equal parts of a first peripheral portion to the fifth peripheral portion from one surface to the other surface,
$B_{1p}$: an area proportion of the binder in the first peripheral portion,
$B_{5c}$: an area proportion of the binder in a fifth central portion when the cross section in the thickness direction of the electrode active material layer in a central region of the electrode active material layer is divided into five equal parts of a first central portion to the fifth central portion from one surface to the other surface, and
$B_{1c}$: an area proportion of the binder in the first central portion.

According to the electrode active material layer in the present disclosure, a mechanical characteristic different for each portion can be provided.

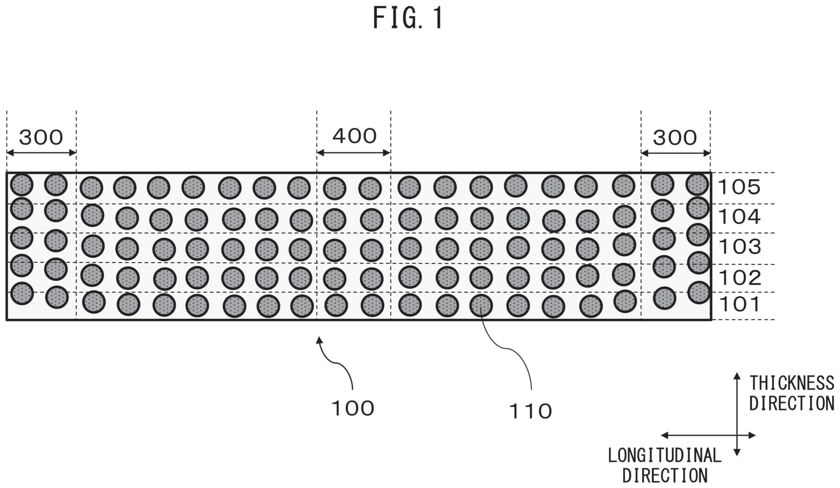

Specifically, for example, as in FIG. 1, an electrode active material layer 100 according to the present disclosure includes an electrode active material (not illustrated) and a binder 110. Then, a binder segregation degree in a peripheral region 300 is greater than a binder segregation degree in a central region 400. Note that a binder segregation degree in the peripheral region 300 is represented by "$B_{5p}/B_{1p}$", and a binder segregation degree in the central region 400 is represented by "$B_{5c}/B_{1c}$". The binder segregation degree is different in the peripheral region 300 and the central region 400, and thus the peripheral region 300 and the central region 400 have different mechanical characteristics.

Note that, herein, a cross section in a thickness direction of the electrode active material layer 100 is virtually equally divided into a first portion to a fifth portion (101 to 105), and a binder area proportion in the first portion to the fifth portion (101 to 105) in the peripheral region 300 is "$B_{1p}$ to $B_{5p}$", and a binder area proportion in the first portion to the fifth portion (101 to 105) in the central region 400 is "$B_{1c}$ to $B_{5c}$".

Embodiments according to the present disclosure will be described below in detail. Note that the present disclosure is not limited to the embodiments below, and can be implemented while various modifications are made within the scope of the purpose of the present disclosure.

An electrode active material layer according to the present disclosure satisfies the following relationship:

$$(B_{5p}/B_{1p})/(B_{5c}/B_{1c}) \geq 1.50$$

$$B_{5p} \geq B_{1p}$$

$B_{5p}$: an area proportion of the binder in a fifth peripheral portion when a cross section in a thickness direction of the electrode active material layer in a peripheral region of the electrode active material layer is divided into five equal parts of a first peripheral portion to the fifth peripheral portion from one surface to the other surface,

$B_{1p}$: an area proportion of the binder in the first peripheral portion,

$B_{5c}$: an area proportion of the binder in a fifth central portion when the cross section in the thickness direction of the electrode active material layer in a central region of the electrode active material layer is divided into five equal parts of a first central portion to the fifth central portion from one surface to the other surface, and

$B_{1c}$: an area proportion of the binder in the first central portion.

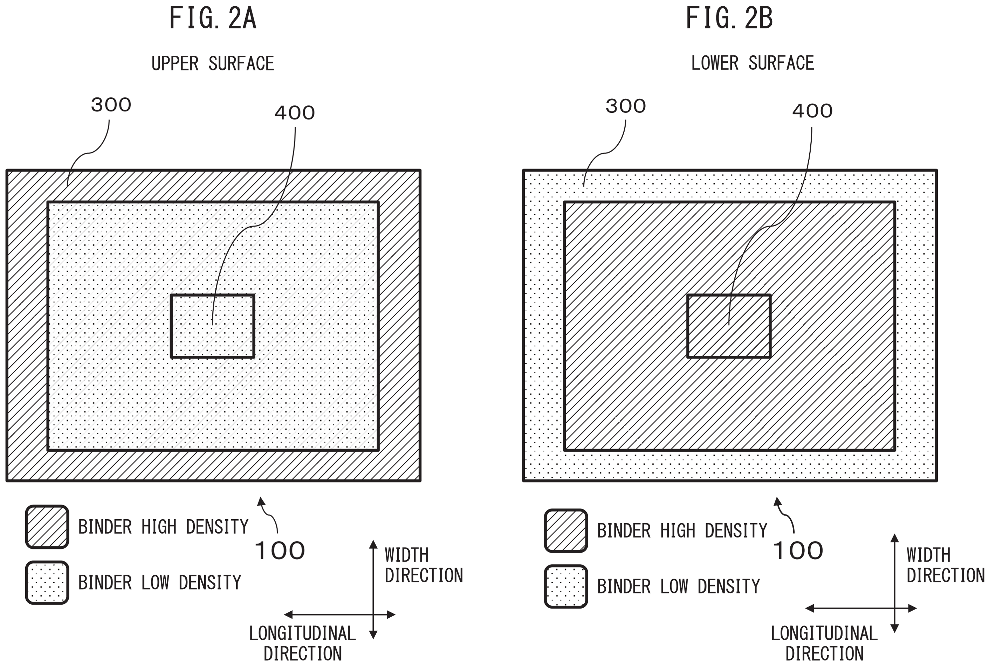

In the present specification, as illustrated in FIGS. 1 and 2, the "peripheral region" means a region in the electrode active material layer included in a length of 20%, 10%, or 5% of an entire length from an end portion in a longitudinal direction and a width direction of the electrode active material layer.

In the present specification, as illustrated in FIGS. 1 and 2, the "central region" means a region in the electrode active material layer included in a length of 20%, 10%, or 5% of an entire length from the center in the longitudinal direction and the width direction of the electrode active material layer.

The one surface is a surface in which $B_{5p} \geq B_{1p}$. In this way, the first peripheral portion to the fifth peripheral portion and the first central portion to the fifth central portion are specified.

$(B_{5p}/B_{1p})/(B_{5c}/B_{1c}) \geq 1,50$, and thus the peripheral region and the central region have sufficiently different binder segregation degrees, and can each acquire a different mechanical characteristic. Further, it may be set that $(B_{5p}/B_{1p})/(B_{5c}/B_{1c}) \geq 1.60$, 1.70, 1.80, 1.90, or 2.00, and it may be set that $(B_{5p}/B_{1p})/(B_{5c}/B_{1c}) \leq 10.00$, 8.00, 6.00, 5.00, 4.00, or 3.00.

An area proportion of the binder can be acquired by computing an area occupied by the binder of the first peripheral portion to the fifth peripheral portion and the first central portion to the fifth central portion in the cross section in the thickness direction of the electrode active material layer by a scanning electron microscope (SEM) image. For example, when SBR is used as the binder, a bright contrast can be acquired by dyeing the SBR by an Os dyeing method for adding osmium (Os) to a double bond portion of the SBR, and computation is facilitated.

In the electrode active material layer according to the present disclosure, it may be set that $B_{5p}/B_{5c} \geq 1.20$, 1.22, 1.24, 1.26, 1.28, 1.30, or 1.32. Further, in the electrode active material layer according to the present disclosure, it may be set that $B_{1p}/B_{1c} \leq 0.80$, 0.75, 0.70, or 0.65.

When bending stress is applied to the electrode active material layer, the end portion on the surface side of the electrode active material layer is especially easily subjected to a load and cracks. Therefore, the peripheral region of the electrode active material layer requires high flexibility on the surface side. In contrast, in the electrode active material layer according to the present disclosure as described above, when the first portion (the first peripheral portion and the first central portion) is disposed in contact with a current collector layer, a percentage content of the binder is great on the surface side (fifth central portion) in the peripheral region of the electrode active material layer, and thus a crack in the end portion on the surface side of the electrode active material layer can be suppressed.

Meanwhile, the central region of the electrode active material layer requires high binding capacity with the current collector layer. In contrast, in the electrode active material layer according to the present disclosure as described above, when the first portion (the first peripheral portion and the first central portion) is disposed in contact with the current collector layer, a percentage content of the binder is great on the current collector layer side (first central portion) in the central region of the electrode active material layer, and thus the electrode active material layer has high binding capacity with the current collector layer, and can prevent peeling.

Specifically, for example, as in FIG. 2A, a percentage content of the binder is greater in the peripheral region 300 than the central region 400 in one side surface (upper surface) in the thickness direction of the electrode active material layer 100 according to the present disclosure, and, as in FIG. 2B, a percentage content of the binder is greater in the central region 400 than the peripheral region 300 in an opposite side surface (lower surface) to the upper surface. The lower surface of the electrode active material layer 100 having such a binder distribution is disposed in contact with the current collector layer, and thus an electrode laminate having high binding capacity between the electrode active material layer 100 and the current collector layer and also having high flexibility can be acquired.

In the electrode active material layer according to the present disclosure, it may be set that $B_{5p}/B_{5c} \leq 2.00$, 1.80, 1.60, or 1.40. Further, in the electrode active material layer according to the present disclosure, it may be set that $B_{1p}/B_{1c} \geq 0.50$, 0.55, or 0.60.

A content of the binder is not particularly limited, and, for example, a content of the binder may be 0.5 mass% or more, 1.0 mass% or more, or 2.0 mass% or more, and 10.0 mass% or less, 7.0 mass% or less, 5.0 mass% or less, 4.5 mass% or less, or 4.0 mass% or less with respect to 100 mass% of a whole (total solid content) of the electrode active material layer.

A material of the binder is not particularly limited. The binder may be, for example, a material such as polyvinylidene difluoride (PVdF), butadiene rubber (BR), polytetrafluoroethylene (PTFE), and styrene-butadiene rubber (SBR), but is not limited thereto. The binder is not particularly limited, and only one kind may be used alone, or two or more kinds may be used in combination.

A shape of the electrode active material layer is not particularly limited, and may be, for example, a sheet shape having a substantially plane surface. A thickness of the electrode current collector layer is not particularly limited, and may be, for example, 0.1 $\mu$m or more, 1 $\mu$m or more, or 10 $\mu$m or more, and 2.0 mm or less, 1.0 mm or less, or 0.5 mm or less.

The electrode active material layer according to the present disclosure is an electrode active material layer including an electrode active material and a binder. The electrode active material layer according to the present disclosure may be a positive electrode active material layer and may be a negative electrode active material layer.

<Positive Electrode Active Material Layer>

When the electrode active material layer according to the present disclosure is the positive electrode active material layer, the positive electrode active material layer includes at least a positive electrode active material and a binder, and may further freely include a solid electrolyte, a conductive aid, and the like. The positive electrode active material layer may additionally include various additives. Each content of the positive electrode active material, the solid electrolyte, the conductive aid, and the like in the positive electrode active material layer may be appropriately determined according to target battery performance.

(Positive Electrode Active Material)

A material of the positive electrode active material is not particularly limited as long as the material can occlude and emit a lithium ion. The positive electrode active material may be, for example, lithium cobalt oxide ($LiCoO_2$), lithium nickel oxide ($LiNiO_2$), lithium manganese oxide ($LiMn_2O_4$), lithium nickel-cobalt-manganese oxide (NCM: $LiCo_{1/3}Ni_{1/3}Mn_{1/3}O_2$), lithium nickel-cobalt-aluminum oxide ($LiNi_{0.8}(CoAl)_{0.2}O_2$), a heteroelement substituent Li-Mn spinel of composition represented by $Li_{1+x}Mn_{2-x-y}M_yO_4$ (M is one or more kinds of metal elements selected from Al, Mg, Co, Fe, Ni, and Zn), and the like, but is not limited thereto.

The positive electrode active material is not particularly limited, but may include a covering layer. The covering layer is a layer having lithium ion conduction performance, having low reactivity with the positive electrode active material and the solid electrolyte, and containing a substance that does not flow even in contact with the active material and the solid electrolyte and can maintain a form of the covering layer. Specific examples of a material constituting the covering layer can include $Li_4Ti_5O_{12}$, $Li_3PO_4$, and the like in addition to $LiNbO_3$, but the material is not limited thereto.

A shape of the positive electrode active material is not particularly limited as long as the shape is a general shape as a positive electrode active material of a battery. The positive electrode active material may have, for example, a particulate shape. The positive electrode active material may be a primary particle, and may be a secondary particle acquired from aggregation of a plurality of primary particles. An average particle diameter $D_{50}$ of the positive electrode active material may be, for example, 1 nm or more, 5 nm or more, or 10 nm or more, and 500 $\mu$m or less, 100 $\mu$m or less, 50 $\mu$m or less, or 30 $\mu$m or less. Note that the average particle diameter $D_{50}$ is a particle diameter (median diameter) having an integrated value of 50% in a particle size distribution with reference to volume being obtained by laser diffraction/scattering.

(Solid Electrolyte)

A material of the solid electrolyte is not particularly limited, and may be, for example, a sulfide solid electrolyte, an oxide solid electrolyte, a polymer electrolyte, or the like.

Examples of the sulfide solid electrolyte include a sulfide-based amorphous solid electrolyte, a sulfide-based crystalline solid electrolyte, an argyrodite solid electrolyte, or the like, but the sulfide solid electrolyte is not limited thereto. Specific examples of the sulfide solid electrolyte can include: $Li_2S-P_2S_5$ series ($Li_7P_3S_{11}$, $Li_3PS_4$, $Li_8P_2S_9$, and the like), $Li_2S-SiS_2$, $LiI-Li_2S-SiS_2$, $LiI-Li_2S-P_2S_5$, $LiI-LiBr-Li_2S-P_2S_5$, $Li_2S-P_2S_5-GeS_2$ ($Li_{13}GeP_3S_{16}$, $Li_{10}GeP_2S_{12}$, and the like), $LiI-Li_2S-P_2O_5$, $LiI-Li_3PO_4-P_2S_5$, $Li_{7-x}PS_{6-x}Cl_x$, and the like; or a combination thereof, but the sulfide solid electrolyte is not limited thereto.

Examples of the oxide solid electrolyte can include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, or $Li_{3+x}PO_{4-x}N_x$ (LiPON), or the like; or a combination thereof, but the oxide solid electrolyte is not limited thereto.

The sulfide solid electrolyte and the oxide solid electrolyte may be glass and may be crystallized glass (glass ceramics).

Examples of the polymer electrolyte include polyethylene oxide (PEO), polypropylene oxide (PPO), a copolymer thereof, and the like, but the polymer electrolyte is not limited thereto.

(Conductive Aid)

The conductive aid is not particularly limited. The conductive aid may be, for example, vapor growth carbon fiber (VGCF), acetylene black (AB), Ketjenblack (KB), carbon nanotube (CNT), carbon nanofiber (CNF), and the like, but the conductive aid is not limited thereto. The conductive aid may have, for example, a particulate shape or a fibrous shape, and a size of the conductive aid is not particularly limited. The conductive aid is not particularly limited, and only one kind may be used alone, or two or more kinds may be used in combination.

<Negative Electrode Active Material Layer>

When the electrode active material layer according to the present disclosure is the negative electrode active material layer, the negative electrode active material layer includes at least a negative electrode active material and a binder, and may further freely include a solid electrolyte, a conductive aid, and the like. The negative electrode active material layer may additionally include various additives. The binder, the solid electrolyte, and the conductive aid can be referred to the description of the positive electrode active material layer described above. Each content of the negative electrode active material, the solid electrolyte, the conductive aid, and the like in the negative electrode active material layer may be appropriately determined according to target battery performance.

(Negative Electrode Active Material)

As the negative electrode active material, various substances whose potential (charge/discharge potential) at which a lithium ion is occluded and emitted is a potential lower than that of the positive electrode active material according to the present disclosure described above may be adopted. A material of the negative electrode active material is not particularly limited, and may be metal lithium, and may be a material that can occlude and emit a metal ion such as a lithium ion. Examples of the material that can occlude and emit a metal ion such as a lithium ion can include, for example, an alloy negative electrode active material, a carbon material, lithium titanate ($Li_4Ti_5O_{12}$), and the like, but the material is not limited thereto.

The alloy negative electrode active material is not particularly limited, and examples include, for example, an Si alloy negative electrode active material, an Sn alloy negative electrode active material, or the like. As the Si alloy negative electrode active material, there is silicon, a silicon oxide, a silicon carbide, a silicon nitride, a solid solution thereof, or the like. Further, the Si alloy negative electrode active material can include a metal element other than silicon, for example, Fe, Co, Sb, Bi, Pb, Ni, Cu, Zn, Ge, In, Sn, Ti, and the like. As the Sn alloy negative electrode active material, there is tin, a tin oxide, a tin nitride, a solid solution thereof, or the like. Further, the Sn alloy negative electrode active material can include a metal element other than tin, for example, Fe, Co, Sb, Bi, Pb, Ni, Cu, Zn, Ge, In, Ti, Si, and the like.

The carbon material is not particularly limited, and examples include, for example, hard carbon, soft carbon, graphite, and the like.

A shape of the negative electrode active material is not particularly limited, and may be a general shape as a negative electrode active material of a battery. The negative electrode active material may have, for example, a particulate shape or a sheet shape.

<<Method for Manufacturing Electrode Active Material Layer>>

A method for manufacturing an electrode active material layer according to the present disclosure includes:

providing an electrode composite material slurry layer containing an electrode active material, a binder, and a dispersion medium; and
drying the electrode composite material slurry layer, wherein,
in a step of the drying, a drying speed in a peripheral region of the electrode composite material slurry layer and a drying speed in a central region of the electrode composite material slurry layer are different.

According to the present disclosure, the method for manufacturing an electrode active material layer having a mechanical characteristic different for each portion can be provided.

The electrode active material layer is generally formed by coating, for example, a current collector layer with electrode composite material slurry, forming an electrode composite material slurry layer, and then drying the electrode composite material slurry layer.

In the drying, a movement of a binder in a volatile direction of a dispersion medium, which is so-called binder migration, occurs. A movement amount of the binder increases as a volatile speed of the dispersion medium, i.e., a drying speed of the electrode composite material slurry layer is faster.

Therefore, by changing a drying speed in the peripheral region of the electrode composite material slurry layer and a drying speed in the central region, a movement amount of the binder is different in the peripheral region and the central region, and thus the electrode active material layer in which a binder segregation degree in the peripheral region and a binder segregation degree in the central region are different can be manufactured.

The method for manufacturing an electrode active material layer according to the present disclosure includes providing an electrode composite material slurry layer containing an electrode active material, a binder, and a dispersion medium. The electrode active material layer, the electrode active material, and the binder can be referred to the description of the electrode active material layer described above.

With regard to the present disclosure, the "electrode composite material" means a composition that can constitute the electrode active material layer by being as it is or further containing the other component. Further, with regard to the present disclosure, the "electrode composite material slurry" means slurry that includes a dispersion medium in addition to the "electrode composite material" and can thus constitute the electrode active material layer by coating and drying.

The dispersion medium is not particularly limited, and may be, for example, a nonpolar solvent such as heptane, xylene, and toluene, and a polar solvent such as a tertiary amine solvent, an ether solvent, a thiol solvent, a ketone solvent (for example, diisobutyl ketone), and an ester solvent (for example, butyl butyrate).

A content of the dispersion medium is not particularly limited, and may be set in such a way that a solid content percentage of the electrode composite material slurry is 30% or more, 35% or more, 40% or more, 45% or more, or 50% or more, and is 80% or less, 75% or less, 70% or less, 65% or less, or 60% or less.

A coating method of the electrode composite material slurry is not particularly limited, and may be a doctor blade method, a die coating method, a gravure coating method, a spray coating method, an electrostatic coating method, a bar coating method, and the like.

The method for manufacturing an electrode active material layer according to the present disclosure includes drying the electrode composite material slurry layer.

The drying method is not particularly limited, and may be, for example, laser drying, warm air drying, hot air drying, vacuum drying, dielectric heat drying, and the like.

A drying temperature is not particularly limited, and may be 50°C or higher, 70°C or higher, 90°C or higher, 100°C or higher, 110°C or higher, or 120°C or higher, and may be 300°C or lower, 250°C or lower, 200°C or lower, 180°C or lower, 160°C or lower, 150°C or lower, or 140°C or lower.

In a step of the drying, a drying speed in a peripheral region of the electrode composite material slurry layer and a drying speed in a central region of the electrode composite material slurry layer are different.

Herein, the central region and the peripheral region of the electrode composite material slurry layer can be referred by replacing the "electrode active material layer" with the "electrode composite material slurry layer" in the description of the central region and the peripheral region of the electrode active material layer described above.

A method for adjusting a drying speed is not particularly limited, and, for example, an adjustment may be made in such a way that a drying speed of the peripheral region and a drying speed of the central region are different.

<<Electrode Laminate>>

An electrode laminate according to the present disclosure includes a current collector layer, and the electrode active material layer according to the present disclosure laminated on the current collector layer.

According to the present disclosure, the electrode laminate having a mechanical characteristic different for each portion can be provided.

The electrode laminate according to the present disclosure includes the current collector layer, and the electrode active material layer according to the present disclosure laminated on the current collector layer. Further, the electrode laminate may be a bipolar electrode laminate including a positive electrode active material layer and a negative electrode active material layer. The electrode active material layer, the positive electrode active material layer, and the negative electrode active material layer can be referred to the description of the electrode active material layer described above.

Peel strength between the current collector layer in the central region of the electrode active material layer, and the electrode active material layer is not particularly limited, and may be, for example, 0.06 N/cm or more, 0.07 N/cm or more, or 0.08 N/cm or more, and 0.5 N/cm or less, 0.4 N/cm or less, 0.3 N/cm or less, or 0.2 N/cm or less.

Peel strength between the current collector layer and the electrode active material layer can be computed by, according to JIS-K-6854-1, fixing a tested material of the current collector layer on which the electrode active material layer is laminated to a hard base member with a double-sided tape or an adhesive, peeling one end portion of the electrode active material layer, fixing the end portion to a 90° peel testing machine, peeling the electrode active material layer while pulling the electrode active material layer in a direction forming 90° with respect to an unpeeled portion of the tested material, and measuring tensile strength by a load cell and the like.

Flexibility of the electrode laminate is not particularly limited, and may be appropriately determined by necessary performance and the like of the active material layer. For flexibility, for example, in a cylindrical mandrel test, an electrode laminate acquired by laminating an electrode active material layer on a current collector layer is wound around a cylinder, and a diameter of the cylinder when a crack starts to be generated in the electrode active material layer may be 30 mm or less, 28 mm or less, 26 mm or less, 24 mm or less, 22 mm or less, or 20 mm or less, and 5 mm or more, 7 mm or more, or 9 mm or more.

The current collector layer may be a positive electrode current collector layer and may be a negative electrode current collector layer. When the current collector layer is the positive electrode current collector layer, the positive electrode active material layer is laminated on the current collector layer. Further, when the current collector layer is the negative electrode current collector layer, the negative electrode active material layer is laminated on the current collector layer. The positive electrode active material layer and the negative electrode active material layer can be referred to the description of the electrode active material layer described above.

<Positive Electrode Current Collector Layer>

When the current collector layer according to the present disclosure is the positive electrode current collector layer, a material of an electric conductor layer included in the current collector layer is not particularly limited, but a general electric conductor can be appropriately adopted as a positive electrode electric conductor of a battery. Examples of the material of the electric conductor layer can include, for example, Cu, Ni, Cr, Au, Pt, Ag, Al, Fe, Ti, Zn, Co, stainless steel, and the like, but the material is not limited thereto. The positive electrode current collector layer may include a carbon coat layer on a surface thereof. The positive electrode current collector layer may be acquired by applying the above-described metal to a metal foil or a base material by plating or vapor deposition.

A shape of the positive electrode current collector layer is not particularly limited, and examples can include, for example, a foil shape, a plate shape, a mesh shape, or the like. Particularly, the foil shape is preferable.

A thickness of the positive electrode current collector layer is not particularly limited, and may be 0.1 $\mu$m or more or 1 $\mu$m or more, and 1 mm or less or 100 $\mu$m or less.

<Negative Electrode Current Collector Layer>

When the current collector layer according to the present disclosure is the negative electrode current collector layer, a material of an electric conductor layer included in the current collector layer is not particularly limited, but a general electric conductor can be appropriately adopted as a negative electrode electric conductor of a battery. Examples of the material used for the electric conductor layer can include Cu, Ni, Cr, Au, Pt, Ag, Al, Fe, Ti, Zn, Co, stainless steel, a carbon sheet, or the like, but the material is not limited thereto. The negative electrode current collector layer may include a carbon coat layer on a surface thereof.

A shape of the negative electrode current collector layer is not particularly limited, and examples can include, for example, a foil shape, a plate shape, a mesh shape, or the like. Particularly, the foil shape is preferable.

A thickness of the negative electrode current collector layer is not particularly limited, and may be, for example, 0.1 $\mu$m or more or 1 $\mu$m or more, and 1 mm or less or 100 $\mu$m or less.

<<Method for Manufacturing Electrode Laminate>>

A method for manufacturing an electrode laminate according to the present disclosure includes:

providing a current collector layer including an electric conductor layer and a carbon coat layer on the electric conductor layer;
providing, on at least a part of the carbon coat layer, an electrode composite material slurry layer containing the electrode active material, the binder, and a dispersion medium; and
irradiating, with laser light, the electrode composite material slurry layer, and an adjacent region being adjacent to the electrode composite material slurry layer and including the carbon coat layer, and drying the electrode composite material slurry layer.

According to the present disclosure, the method for manufacturing an electrode laminate having a mechanical characteristic different for each portion can be provided.

Since a crack is easily generated particularly in the peripheral region of the electrode active material layer included in the electrode laminate, it is preferable from a viewpoint of increasing flexibility that a great amount of binders is distributed on the surface side in the peripheral region. In other words, it is preferable that binder migration occurs during drying of the electrode composite material slurry layer.

On the other hand, since binding capacity between the electrode active material layer included in the electrode laminate and the current collector layer greatly depends on binding capacity between the electrode active material layer in the central region and the current collector layer, a great amount of the binders desirably remains on a bonding surface. In other words, it is not preferable that binder migration occurs during drying of the electrode composite material slurry layer.

In contrast, at least a part of the carbon coat layer in the current collector layer including the carbon coat layer is coated with the electrode composite material slurry layer, the electrode composite material slurry layer and an adjacent region being adjacent to the electrode composite material slurry layer are irradiated with the laser light, and the electrode composite material slurry layer is dried, and thus binder migration can be caused to occur more in the peripheral region of the electrode composite material slurry layer than in the central region of the electrode composite material slurry layer. Therefore, a binder segregation degree in the peripheral region is greater than a binder segregation degree in the central region.

The present disclosure is not limited to a theory, but the carbon coat layer has high laser light absorptivity, and thus the current collector layer including the carbon coat layer is more likely to absorb the laser light and be raised to a high temperature. Therefore, a surface of the carbon coat layer of the current collector layer in the adjacent region is irradiated with the laser light, and thus the current collector layer in the adjacent region is raised to a high temperature. Then, the heat is transferred to the peripheral region of the electrode composite material slurry layer, and thus the peripheral region of the electrode composite material slurry layer is also raised to a high temperature and binder migration is accelerated. On the other hand, since the central region of the electrode composite material slurry layer has a small heat transfer amount from the adjacent region, binder migration is not accelerated.

Therefore, the electrode laminate having high flexibility in the peripheral region and high binding capacity between the electrode active material layer and the current collector layer in the central region can be manufactured, and the entire electrode laminate has high flexibility and high binding capacity between the electrode active material layer and the current collector layer.

The method for manufacturing an electrode laminate according to the present disclosure includes providing a current collector layer including an electric conductor layer and a carbon coat layer on the electric conductor layer. The electric conductor layer can be referred to the description of the electrode laminate described above. The carbon coat layer may be laminated on the entire surface of the electric conductor layer, or may be laminated on a part of the surface of the electric conductor layer.

(Carbon Coat Layer)

Laser light absorptivity of the carbon coat layer with respect to the laser light is not particularly limited, and may be, for example, 0.20 or more, 0.30 or more, 0.40 or more, or 0.50 or more. With high laser light absorptivity of the carbon coat layer, migration of the end portion of the electrode active material layer can be accelerated. Further, laser light absorptivity of the carbon coat layer may be 1.00 or less, 0.90 or less, 0.80 or less, or 0.60 or less.

The laser light absorptivity (-) is measured by laser light reflectivity (-) by using a spectrophotometer. The laser light absorptivity (-) is computed from 1 - [laser light reflectivity].

The carbon coat layer may have laser light absorptivity adjusted by the surface being rubbed with a nonwoven fabric and the like.

The carbon coat layer includes at least a carbon particle, and may include the other binder, a dispersant, and the like. The binder can be referred to the description of the electrode active material layer described above. Examples of the dispersant include, for example, carboxymethyl cellulose, and the like. A content of the carbon particle, the binder, the dispersant, and the like may be appropriately determined by performance required from the carbon coat layer, and the like.

A shape of the carbon coat layer is not particularly limited, and may be, for example, a sheet shape. A thickness of the carbon coat layer is not particularly limited, and may be, for example, 0.1 $\mu$m or more, 0.2 $\mu$m or more, 0.3 $\mu$m or more, or 0.5 $\mu$m or more, and 5.0 $\mu$m or less, 3.0 $\mu$m or less, 2.0 $\mu$m or less, or 1.0 $\mu$m or less.

Heat conductivity of a current collector included in the current collector layer is not particularly limited, and may be, for example, 50 W/m·K or more, 70 W/m·K or more, 100 W/m·K or more, 150 W/m·K or more, or 200 W/m·K or more. With high heat conductivity of the current collector layer, migration in the peripheral region of the electrode active material layer can be accelerated. Further, heat conductivity of the current collector may be 400 W/m·K or less, 350 W/m·K or less, or 300 W/m·K or less.

The method for manufacturing an electrode laminate according to the present disclosure includes providing, on at least a part of a carbon coat layer, an electrode composite material slurry layer containing an electrode active material, a binder, and a dispersion medium. The electrode active material and the binder can be referred to the description of the electrode active material layer described above, and the dispersion medium and the electrode composite material slurry layer can be referred to the description of the method for manufacturing an electrode active material layer described above.

The carbon coat layer is preferably present in the adjacent region of the electrode composite material slurry layer from a viewpoint of heating the electrode composite material slurry layer to a high temperature.

A coating method is not particularly limited, and may be a doctor blade method, a die coating method, a gravure coating method, a spray coating method, an electrostatic coating method, a bar coating method, and the like.

The method for manufacturing an electrode laminate according to the present disclosure includes irradiating, with laser light, an electrode composite material slurry layer and an adjacent region being adjacent to the electrode composite material slurry layer, and drying the electrode composite material slurry layer.

Herein, the central region and the peripheral region of the electrode composite material slurry layer can be referred to by replacing the "electrode active material layer" with the "electrode composite material slurry layer" in the description of the central region and the peripheral region of the electrode active material layer described above.

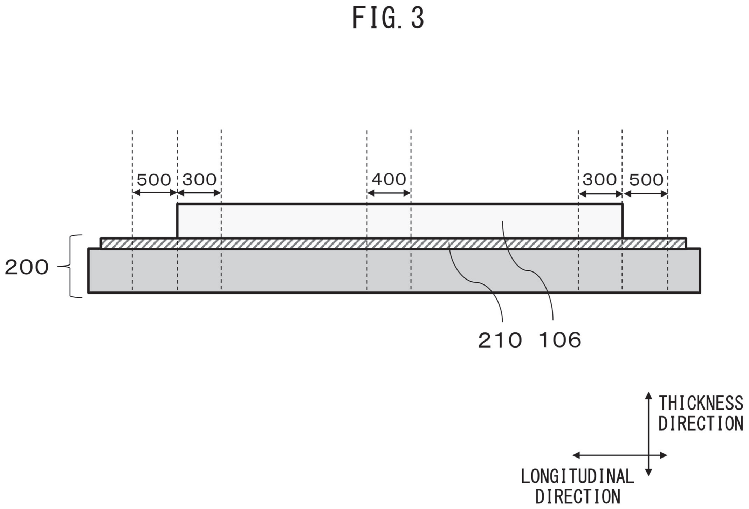

In the present specification, as in FIG. 3, the "adjacent region" means a region outside the electrode active material layer included in a length of 10%, 15%, or 20% of an entire length from an end portion in a longitudinal direction and a width direction (not illustrated) of an electrode composite material slurry layer 106, and means a region adjacent to the peripheral region.

A laser light source is not particularly limited, and may be, for example, a YAG laser, a carbon dioxide laser, and the like. A wavelength of the laser light may be, for example, 0.5 $\mu$m or more, 0.6 $\mu$m or more, 0.7 $\mu$m or more, 0.8 $\mu$m or more, or 0.9 $\mu$m or more, and 1.5 $\mu$m or less, 1.4 $\mu$m or less, 1.3 $\mu$m or less, 1.2 $\mu$m or less, or 1.1 $\mu$m or less.

An output of the laser light source is not particularly limited, and may be appropriately determined by an irradiation region of the laser light, an irradiation time of the laser light, and the like. An output of the laser light source may be, for example, 0.1 kW or more, 1 kW or more, 5 kW or more, 10 kW or more, 15 kW or more, 20 kW or more, or 30 kW or more, and 100 kW or less or 50 kW or less.

An irradiation time of the laser light is not particularly limited, and, for example, irradiation may be performed until a falling drying rate period of the electrode composite material slurry layer is reached. An irradiation time of the laser light may be, for example, 30 seconds or longer, 1 minute or longer, or 2 minutes or longer, and 30 minutes or shorter, 20 minutes or shorter, or 10 minutes or shorter.

EXAMPLES

The present invention will be more specifically described below with Examples and Comparative Example, but the present invention is not limited thereto.

<<Production of Electrode Active Material Layer>>

Electrode composite material slurry was produced by measuring the amount of lithium cobalt oxide (LiCoO$_2$) as an electrode active material and a styrene-butadiene copolymer (SBR) as a binder in one second at a mass ratio of 97.5:2.5, and mixing the resultant with deionized water at a solid content percentage of 55%.

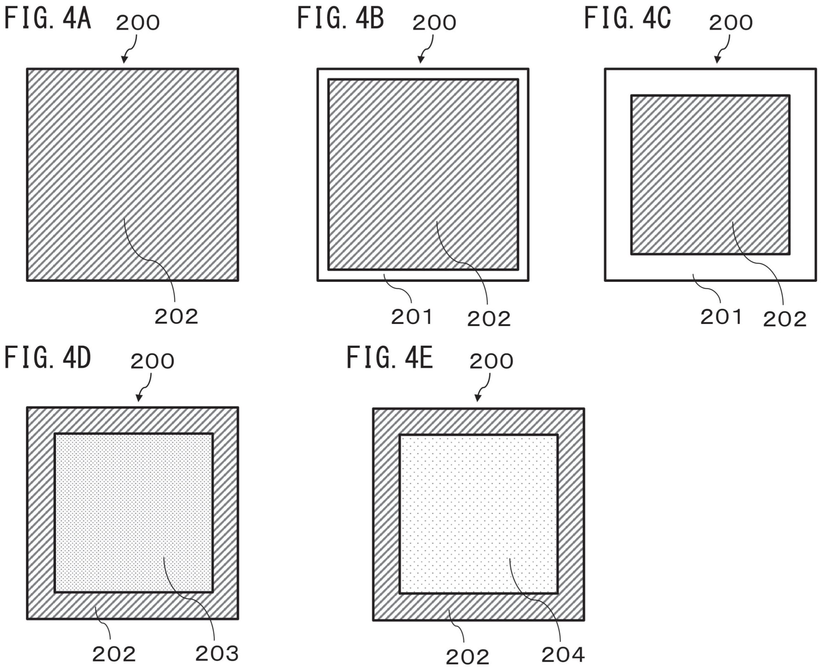

As in FIG. 4A, a current collector layer acquired by laminating a carbon coat layer A on an entire surface of a square aluminum foil surface having a side length of 200 mm as an electric conductor layer body was prepared as a current collector layer for production of Example 1.

As in FIG. 4B, a current collector layer acquired by laminating, in a square shape, the carbon coat layer A having a side length of 180 mm on a central portion of the square aluminum foil surface having a side length of 200 mm as an electric conductor layer body was prepared as a current collector layer for production of Example 2.

As in FIG. 4C, a current collector layer acquired by laminating, in a square shape, the carbon coat layer A having a side length of 150 mm on the central portion of the square aluminum foil surface having a side length of 200 mm as an electric conductor layer body was prepared as a current collector layer for production of Example 3.

Furthermore, a carbon coat layer B acquired by reducing laser light absorptivity of a rubbed portion of the carbon coat layer A by rubbing, with a nonwoven fabric, the carbon coat layer A present in a square region having a side length of 150 mm of the central portion of the surface of the current collector layer for production of Example 1 was formed, and a current collector layer for production of Example 4 as in FIG. 4D was produced. Note that the laser light absorptivity of the carbon coat layer A was 0.5, and laser light absorptivity of the carbon coat layer B was 0.4.

Next, except that a carbon coat layer C was formed by rubbing the carbon coat layer A with a nonwoven fabric, a current collector layer for production of Example 5 as in Table 1 and FIG. 4E was produced similarly to the current collector layer for production of Example 4. Note that laser light absorptivity of the carbon coat layer C was 0.2.

Further, a square aluminum foil current collector having a side length of 200 mm without a carbon coat layer being laminated was prepared as a current collector layer for production of Comparative Example 1. Note that laser light absorptivity of the aluminum foil current collector was 0.05.

The central portion of the surface of each of the current collector layers described above was coated with the electrode composite material slurry described above having a thickness of 400 $\mu$m in a square shape of a side length of 100 mm, and an electrode composite material slurry layer was formed. Then, a surface on a side on which the electrode composite material slurry layer was laminated in a square region having a side length of 200 mm in the presence of the current collector was irradiated with laser light, the electrode composite material slurry layer was dried until the electrode composite material slurry layer reached a falling drying rate period, and an electrode active material layer of Examples 1 to 5 and Comparative Example 1 as in Table 1 was produced on the current collector layer.

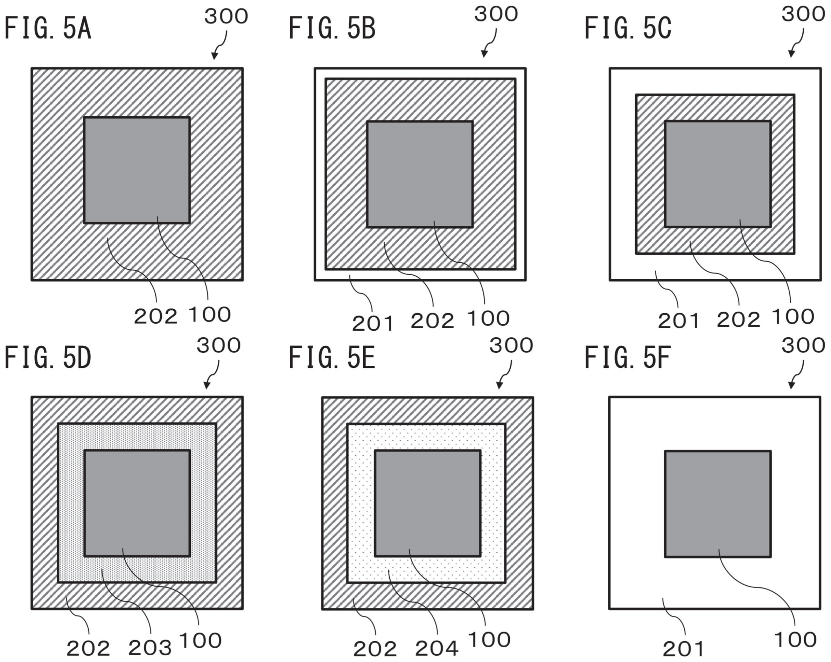

Herein, FIG. 5A corresponds to an electrode laminate including the electrode active material layer of Example 1, FIG. 5B corresponds to an electrode laminate including the electrode active material layer of Example 2, FIG. 5C corresponds to an electrode laminate including the electrode active material layer of Example 3, FIG. 5D corresponds to an electrode laminate including the electrode active material layer of Example 4, FIG. 5E corresponds to an electrode laminate including the electrode active material layer of Example 5, and FIG. 5F corresponds to an electrode laminate including the electrode active material layer of Comparative Example 1.

<<Measurement of Binder Percentage Content>>

From a cross section in a thickness direction of the electrode active material layer of Examples 1 to 5 and Comparative Example 1, $B_{1p}$ to $B_{5p}$ and $B_{1c}$ to $B_{5c}$ were computed by a scanning electron microscope (SEM) image. Measurement results were as shown in Table 1. Note that a first layer was in contact with the current collector layer.

<<Evaluation of Flexibility of Electrode Active Material Layer>>

In a cylindrical mandrel test, flexibility was evaluated by winding the electrode laminate including the electrode active material layer of Examples 1 to 5 and Comparative Example 1 around a cylinder, and measuring a diameter of the cylinder when a crack started to be generated in the electrode active material layer. A smaller diameter of the cylinder means greater flexibility.

<<Evaluation of Binding Capacity of Electrode Active Material Layer with Current Collector Layer>>

Binding capacity of the electrode active material layer with the current collector layer was evaluated by measuring peel strength between the electrode active material layer of Examples 1 to 5 and Comparative Example 1 and the current collector layer by using the electrode laminate including the electrode active material layer of Examples 1 to 5 and Comparative Example 1.

Each of the evaluation results was illustrated in Table 1.

[Table 1]

Table 1

| | ELECTRODE ACTIVE MATERIAL LAYER | | | | | | | | | CURRENT COLLECTOR LAYER | FLEXIBILITY EVALUATION | BINDING CAPACITY EVALUATION |
|---|---|---|---|---|---|---|---|---|---|---|---|---|
| | BINDER AREA PROPORTION (%) | | | | BINDER SEGREGATION DEGREE | | $(B_{5p}/B_{1p})$ $/(B_{5c}/B_{1c})$ | $B_{5p}/B_{5c}$ | $B_{1p}/B_{1c}$ | LASER LIGHT ABSORPTIVITY (-) IN ADJACENT REGION | MINIMUM CYLINDRICAL DIAMETER (mm) IN WHICH CRACK OF ELECTRODE ACTIVE MATERIAL LAYER IS GENERATED | PEEL STRENGTH (N/cm) IN CENTRAL REGION |
| | $B_{1p}$ | Bic | $B_{5p}$ | B5c | $B_{5p}/B_{1p}$ | $B_{5c}/B_{1c}$ | | | | | | |
| EXAMPLE 1 | 1.3 | 2.0 | 4.0 | 3.0 | 3.08 | 1.50 | 2.05 | 1.33 | 0.65 | 0.50 | 10 | 0.11 |
| EXAMPLE 2 | 1.4 | 2.0 | 3.8 | 3.0 | 2.71 | 1.50 | 1.81 | 1.27 | 0.70 | 0.50 | 15 | 0.10 |
| EXAMPLE 3 | 1.6 | 2.0 | 3.6 | 3.0 | 2.25 | 1.50 | 1.50 | 1.20 | 0.80 | 0.50 | 20 | 0.09 |
| EXAMPLE 4 | 1.4 | 2.0 | 3.9 | 3.0 | 2.79 | 1.50 | 1.86 | 1.30 | 0.70 | 0.40 | 10 | 0.10 |
| EXAMPLE 5 | 1.5 | 2.0 | 3.8 | 3.0 | 2.53 | 1.50 | 1.69 | 1.27 | 0.75 | 0.20 | 15 | 0.09 |
| COMPARATIVE EXAMPLE 1 | 1.6 | 2.0 | 3.5 | 3.0 | 2.19 | 1.50 | 1.46 | 1.17 | 0.80 | *0.05* | 50 | 0.09 |

It can be understood from Examples 1 to 5 and Comparative Example 1 in Table 1 that binder migration in the peripheral region of the electrode active material layer was accelerated, a binder segregation degree in the peripheral region was greatly increased further than a binder segregation degree in the central region, and, as a result, flexibility of the electrode active material layer was improved. On the other hand, it can be understood that migration in the central region was not accelerated, the electrode active material layer and the current collector layer had sufficient peel strength, and the electrode active material layer had high binding capacity with the current collector layer. Therefore, the electrode active material layer had different mechanical characteristics in the peripheral region and the central region.

REFERENCE SIGNS LIST

100 Electrode active material layer
101 First portion
102 Second portion
103 Third portion
104 Fourth portion
105 Fifth portion
106 Electrode composite material slurry layer
110 Binder
200 Current collector layer
201 Current collector layer (carbon coat layer unlaminated portion)
202 Current collector layer (carbon coat layer A laminated portion)
203 Current collector layer (carbon coat layer B laminated portion)
204 Current collector layer (carbon coat layer C laminated portion)
210 Carbon coat layer
300 Peripheral region
400 Central region
500 Adjacent region

**Claims**

1. An electrode active material layer comprising an electrode active material and a binder, and satisfying the following relationship:

$$(B_{5p}/B_{1p})/(B_{5c}/B_{1c}) \geq 1.50$$

$$B_{5p} \geq B_{1p}$$

$B_{5p}$: an area proportion of the binder in a fifth peripheral portion when a cross section in a thickness direction of the electrode active material layer in a peripheral region of the electrode active material layer is divided into five equal parts of a first peripheral portion to the fifth peripheral portion from one surface to the other surface,
$B_{1p}$: an area proportion of the binder in the first peripheral portion,
$B_{5c}$: an area proportion of the binder in a fifth central portion when the cross section in the thickness direction of the electrode active material layer in a central region of the electrode active material layer is divided into five equal parts of a first central portion to the fifth central portion from one surface to the other surface, and
$B_{1c}$: an area proportion of the binder in the first central portion.

2. The electrode active material layer according to claim 1 satisfying the following relationship:

$$B_{5p}/B_{5c} \geq 1.20.$$

3. The electrode active material layer according to claim 1 or 2 satisfying the following relationship:

$$B_{1p}/B_{1c} \leq 0.80.$$

4. The electrode active material layer according to any one of claims 1 to 3, wherein a content of the binder is 0.5 mass% or more with respect to the electrode active material layer.

5. The electrode active material layer according to any one of claims 1 to 4, wherein a thickness of the electrode active material layer is 2.0 mm or less.

6. A method for manufacturing the electrode active material layer according to any one of claims 1 to 5 comprising:

   providing an electrode composite material slurry layer containing the electrode active material, the binder, and a dispersion medium; and
   drying the electrode composite material slurry layer, wherein,
   in a step of the drying, a drying speed in a peripheral region of the electrode composite material slurry layer and a drying speed in a central region of the electrode composite material slurry layer are different.

7. An electrode laminate comprising: a current collector layer; and the electrode active material layer according to any one of claims 1 to 5 laminated on the current collector layer.

8. The electrode laminate according to claim 7, wherein peel strength between the current collector layer and the electrode active material layer in the central region of the electrode active material layer is 0.06 N/cm or more.

9. A method for manufacturing the electrode laminate according to claim 7 or 8 comprising:

   providing a current collector layer including an electric conductor layer and a carbon coat layer on the electric conductor layer;
   providing, on at least a part of the carbon coat layer, an electrode composite material slurry layer containing the electrode active material, the binder, and a dispersion medium; and
   irradiating, with laser light, the electrode composite material slurry layer, and an adjacent region being adjacent to the electrode composite material slurry layer and including the carbon coat layer, and drying the electrode composite material slurry layer.

10. The method according to claim 9, wherein laser light absorptivity of the carbon coat layer with respect to the laser light is 0.2 or more.

11. The method according to claim 9 or 10, wherein heat conductivity of the electric conductor layer is 50 W/m·K or more.

FIG. 1

FIG. 2A

UPPER SURFACE

FIG. 2B

LOWER SURFACE

FIG. 3

FIG. 4A  200  202

FIG. 4B  200  201  202

FIG. 4C  200  201  202

FIG. 4D  200  203  202

FIG. 4E  200  204  202

FIG. 5A
300
202 100

FIG. 5B
300
201 202 100

FIG. 5C
300
201 202 100

FIG. 5D
300
202 203 100

FIG. 5E
300
202 204 100

FIG. 5F
300
201 100

EP 4 769 512 A1

Europäisches
Patentamt

European
Patent Office

Office européen
des brevets

# EUROPEAN SEARCH REPORT

**Application Number**

EP 25 21 6227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FINK SAMUEL ET AL: "High-Speed Laser Drying of Lithium-Ion Battery Anodes: Challenges and Opportunities", WORLD ELECTRIC VEHICLE JOURNAL, vol. 14, no. 9, 9 September 2023 (2023-09-09), page 255, XP093263068, ISSN: 2032-6653, DOI: 10.3390/wevj14090255 * paragraph [02.1] - paragraph [02.2]; figure 2 * | 1-11 | INV. H01M4/13 H01M4/139 H01M4/62 H01M4/66 H01M4/04 |
| X | DOBERDÒ ITALO ET AL: "Enabling aqueous binders for lithium battery cathodes - Carbon coating of aluminum current collector", JOURNAL OF POWER SOURCES, vol. 248, 15 February 2014 (2014-02-15), pages 1000-1006, XP093383491, AMSTERDAM, NL ISSN: 0378-7753, DOI: 10.1016/j.jpowsour.2013.10.039 * paragraph [0001] - paragraph [0002] * | 1-8 | |

-----

-----

**TECHNICAL FIELDS SEARCHED (IPC)**

H01M

The present search report has been drawn up for all claims

| Place of search | Date of completion of the search | Examiner |
|---|---|---|
| Munich | 2 April 2026 | Vaalma, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)